# DEMANDE DE BREVET EUROPEEN

(11) **EP 3 829 205 A1**
(43) Date de publication de la demande: **02.06.2021**
(21) Numéro de dépôt: 20205613.1
(22) Date de dépôt: 04.11.2020
(51) Int. Cl.: H04W 12/08, H04L 9/32, H04L 29/06

(54) **PROCÉDÉS ET APPLICATIONS DE CONTRÔLE D'ACCÈS DISTRIBUÉ À UN RÉSEAU DE TÉLÉCOMMUNICATIONS**

(30) Priorité: 29.11.2019 FR 1913484
(71) Demandeur: ORANGE, 75015 Paris (FR)
(72) Inventeur: BERTIN, Emmanuel, 92326 CHATILLON cedex (FR); HATIN, Julien, 92326 CHATILLON CEDEX (FR)
(74) Mandataire: Cabinet Beau de Loménie

(57) **Abrégé**

L'invention vise un procédé d'accès et un procédé de contrôle d'accès mis en oeuvre par des applications d'accès (PEP) et de contrôle d'accès (PDP) inscrits à une chaîne de blocs (CBK). L'application de contrôle d'accès (PDP) est abonnée aux événements publiés par l'application d'accès (PEP).

Sur réception (E40) d'une requête d'accès (RAC), l'application d'accès (PEP) publie (E50) dans ladite chaîne de blocs (CBK), une demande de vérification d'un droit (DVD(RAC)) pour ledit accès. Il reçoit (E70) une réponse à ladite demande de vérification, une réponse déterminée par le application de contrôle d'accès en fonction d'une politique de contrôle d'accès définie par ce application de contrôle d'accès (PDP) et traite la requête d'accès en fonction de cette réponse.

## Description

### Technique antérieure

L'invention se rapporte au domaine général des réseaux de télécommunications, et plus précisément à celui du contrôle de l'accès à un réseau de télécommunications.

De façon traditionnelle, le contrôle de l'accès par un terminal à un réseau de télécommunications, se fait en contrôlant, au moment de l'accès au réseau par le terminal, des éléments cryptographiques mémorisés dans un élément sécurisé du terminal et en vérifiant que les conditions de cet accès sont conformes à un profil du terminal défini par les conditions d'un abonnement souscrit par le propriétaire du terminal auprès de l'opérateur du réseau.

Un tel mécanisme est difficile à mettre en oeuvre lorsque les terminaux ne sont plus des objets attachés à un utilisateur abonné à des services de l'opérateur. C'est le cas de certains objets connectés, comme des ampoules par exemple.

D'autres mécanismes ont été proposés pour adresser la question du contrôle d'accès par un terminal à un réseau, par exemple pour gérer les accès des terminaux d'une flotte de terminaux mobiles d'une entreprise. Dans un tel contexte, l'affectation d'un terminal à un utilisateur est souvent du ressort de l'entreprise, mais le contrôle d'accès au réseau à proprement parler n'est pas modifié.

On connaît également les mécanismes mis en oeuvre par des opérateurs mobiles virtuels (en anglais Mobile Virtual Network Operator, MVNO). Il s'agit de solutions complexes à implémenter dans lesquelles l'opérateur virtuel doit déployer un système d'informations propre, configuré pour provisionner le réseau de l'opérateur principal avec le matériel cryptographique provisionné dans les terminaux. Dans un tel schéma, l'opérateur tiers mobile virtuel gère le contenu des forfaits utilisateur utilisateurs mais l'accès au réseau reste sous le contrôle de l'opérateur principal.

Ces solutions s'avèrent insuffisantes.

### Exposé de l'invention

### L'invention vise un mécanisme de contrôle d'accès plus souple que ceux de l'état actuel de la technique

Ainsi selon un premier aspect, l'invention concerne un procédé d'accès mis en œuvre par une application d'accès dans un réseau de communications comportant un réseau d'accès et un réseau externe au réseau d'accès, cette application d'accès étant inscrite à une chaîne de blocs et mise en œuvre par un dispositif en coupure de flux entre le réseau d'accès et le réseau externe. Ce procédé comporte :
- une étape de réception d'une requête d'accès au réseau externe, cette requête comportant au moins un identifiant d'un terminal attaché au réseau d'accès et des paramètres souhaités de connexion ;
- une étape de publication, dans la chaîne de blocs d'une demande de vérification d'un droit pour cet accès ;
- une étape de réception d'une réponse à cette demande de vérification, la réponse étant déterminée en fonction d'un profil défini pour ce terminal par une application de contrôle d'accès inscrite à la chaine de blocs, cette réponse comportant une instruction de refuser ou une instruction d'accepter l'accès avec des paramètres autorisés de connexion ; et
- une étape de traitement de la requête d'accès selon ces instructions.

Corrélativement, l'invention concerne une application d'accès à un réseau de communications externe à un réseau d'accès, cette application étant inscrite à une chaîne de blocs. Cette application est mise en œuvre par un dispositif en coupure de flux entre le réseau d'accès et le réseau externe et comporte :
- un module de réception d'une requête d'accès au réseau externe, cette requête comportant au moins un identifiant d'un terminal attaché au réseau d'accès et des paramètres souhaités de connexion ;
- un module de publication, dans une chaîne de blocs, d'une demande de vérification d'un droit pour cet accès ;
- un module de réception d'une réponse à cette demande de vérification, la réponse étant déterminée en fonction d'un profil défini pour ce terminal par une application de contrôle d'accès inscrite à la chaine de blocs, cette réponse comportant une instruction de refuser ou une instruction d'autoriser l'accès avec des paramètres autorisés de connexion ; et
- un module de traitement de la requête d'accès selon ces instructions.

Selon un deuxième aspect, l'invention concerne un procédé de contrôle d'accès mis en oeuvre par une application de contrôle d'accès à un réseau de communications externe à un réseau d'accès, cette application étant inscrite dans une chaîne de blocs, ce procédé comportant :
- une étape de détection d'une demande de vérification d'un droit d'accès d'un terminal audit réseau externe, ce terminal étant attaché au réseau d'accès, cette demande comportant au moins un identifiant du terminal et des paramètres souhaités de connexion, cette demande étant publiée dans la chaîne de blocs par une application d'accès au réseau mise en œuvre par un dispositif en coupure de flux entre le réseau d'accès et le réseau externe ;
- une étape de détermination d'une réponse à cette demande de vérification en fonction d'un profil défini par cette application de contrôle d'accès pour le terminal, cette réponse comportant une instruction de refuser ou une instruction d'autoriser l'accès avec des paramètres autorisés de connexion; et
- une étape de fourniture de cette réponse à ladite application d'accès.

Corrélativement, l'invention concerne une application de contrôle d'accès à un réseau de communications externe à un réseau d'accès, cette application étant inscrite dans une chaîne de blocs et comportant :
- un module de détection d'une demande de vérification d'un droit d'accès d'un terminal au réseau externe, le terminal étant attaché au réseau d'accès, cette demande comportant au moins un identifiant du terminal et des paramètres souhaités de connexion, cette demande étant publiée dans la chaîne de blocs par une application d'accès au réseau mise en oeuvre par un dispositif en coupure de flux entre le réseau d'accès et le réseau externe ;
- un module de détermination d'une réponse à cette demande de vérification en fonction d'un profil défini par ce application de contrôle d'accès pour ce terminal, cette réponse comportant une instruction de refuser ou une instruction d'autoriser l'accès avec des paramètres autorisés de connexion ; et
- un module de fourniture de cette réponse à l'application d'accès.

Ainsi, et d'une façon générale, l'invention propose d'utiliser une chaîne de blocs pour découpler les fonctions de contrôle d'accès et les fonctions d'accès. La présente demande est présentée dans le contexte d'une « chaîne de blocs » en anglais « blockchain » mais l'expression « chaîne de blocs » est à comprendre comme couvrant tout type de DLT (en anglais Distributed Ledger Technology) dont les chaînes de blocs à proprement parler constituent un élément particulier.

Comme indiqué dans le document (https://fr.wikipedia.org/wiki/Blockchain), on rappelle que la technologie des chaînes de blocs est une technologie de stockage et de transmission d'informations sans organe de contrôle. Techniquement, il s'agit d'une base de données distribuée dont les informations envoyées par les utilisateurs et les liens internes à la base sont vérifiés et groupés à intervalles de temps réguliers en blocs, l'ensemble étant sécurisé par cryptographie, et formant ainsi une chaîne.

Par extension, une chaîne de blocs est une base de données distribuée qui gère une liste d'enregistrements protégés contre la falsification ou la modification par les noeuds de stockage ; c'est donc un registre distribué et sécurisé de toutes les transactions effectuées depuis le démarrage du système réparti.

Les chaînes de blocs sont notamment caractérisées en ce que leurs contenus ne peuvent pas être modifiés ou supprimés : une information publiée (c'est-à-dire enregistrée ou sauvegardée) dans une chaîne de blocs le reste pour toujours.

L'invention opère donc une différence fondamentale entre les fonctions d'accès et les fonctions de contrôle d'accès. En première approche, il peut être considéré que la fonction de contrôle d'accès consiste essentiellement à définir une politique d'accès et que la fonction d'accès consiste à appliquer une politique d'accès.

En utilisant les concepts de la spécification XACML (eXtensible Access Control Markup Language) qui définit un langage pour le contrôle d'accès, la circulation des règles et l'administration de la politique de sécurité des systèmes d'information, dans un mode de réalisation de l'invention :
- l'accès peut correspondre au point d'application de la décision (PEP) qui protège l'application ciblée, en l'occurrence le réseau auquel le terminal cherche à accéder ; et
- le contrôle d'accès peut correspondre au point de décision de la politique (PDP), endroit où les politiques sont évaluées et comparées contre les requêtes d'autorisation.

D'un point de vue pratique, l'invention offre un nouveau mécanisme dans lequel les droits d'accès ne sont plus préalablement provisionnés dans le terminal et dans le réseau de l'opérateur.

En effet, dans un mode particulier de réalisation de l'invention, l'application de contrôle d'accès n'est pas opérée par l'opérateur du réseau protégé par l'invention mais par un tiers. Lorsqu'un terminal souhaite accéder au réseau de l'opérateur, l'application d'accès de l'opérateur publie cette demande dans la chaîne de blocs. Cette demande à la symbolique suivante : « un terminal souhaite accéder au réseau, y-a-t-il un tiers qui souhaite se porter garant de cet accès, et si oui quelles seraient les conditions d'un tel accès? ».

L'application de contrôle d'accès (ou le tiers dans ce cas-là) peut par exemple être :
- un module d'une société marchande (ou sponsor), qui souhaite par exemple offrir temporairement un forfait à ses clients ;
- un module d'un opérateur mobile virtuel de type MVNO qui aurait, comme mentionné précédemment, acheté des ressources de l'opérateur ;
- une émanation de l'utilisateur du terminal, par exemple un portemonnaie électronique de l'utilisateur pour financer sa connectivité.

Néanmoins, l'application de contrôle d'accès peut aussi être opéré par l'opérateur du réseau protégé par l'invention et donc être une émanation de l'opérateur. L'invention, en proposant de décentraliser la gestion des profils simplifie énormément l'implémentation des entités de gestion de profils mis en oeuvre dans les réseaux actuels, par exemple les entités de type HSS.

L'invention propose un mécanisme de contrôle d'accès excessivement souple puisqu'elle ne nécessite plus de relation contractuelle entre l'utilisateur du terminal et l'opérateur du réseau protégé par l'invention.

Le mécanisme de contrôle d'accès est en outre très sécurisé, tous les événements étant tracés et historiés de façon non répudiable dans la chaîne de blocs.

Dans un mode particulier de réalisation, le procédé d'accès selon l'invention comporte une étape de fourniture d'une application décentralisée d'autorisation, cette application étant destinée à être invoquée par l'application de contrôle d'accès pour fournir la réponse à la demande de vérification du droit d'accès.

Dans ce mode de réalisation, ladite étape de fourniture de réponse du procédé de contrôle d'accès selon l'invention comporte une invocation de cette application décentralisée d'autorisation.

Dans un mode de réalisation particulier, l'application décentralisée d'autorisation est configurée pour permettre une transaction entre un opérateur de l'application de contrôle d'accès et un opérateur de l'application d'accès.

Ce mode de réalisation est particulièrement avantageux lorsque le contrôle d'accès d'un terminal est financé par un tiers puisque le tiers acquitte la transaction au moment où il donne instruction à l'application d'accès d'autoriser l'accès, dans une même opération.

Dans un mode particulier de réalisation, l'application d'accès enregistre l'adresse de cette fonction dans un registre de confiance accessible par la chaîne de blocs.

Dans un mode particulier de réalisation, la requête d'accès comporte un défi signé par une clé privée du terminal, et l'application d'accès est configurée pour :
- communiquer ce défi dans la demande de vérification d'un droit d'accès pour qu'il soit vérifié par l'application de contrôle d'accès ;
- ou pour vérifier elle-même le défi avec une clé publique du terminal si celle-ci est comprise dans ladite requête d'accès, l'étape de publication de la demande de vérification de droit étant mise en œuvre uniquement en cas de vérification positive du défi.

La deuxième option permet à l'utilisateur de s'assurer qu'il reçoit bien une requête d'accès d'un terminal valable avant de publier la demande d'accès dans la chaîne de blocs. Elle permet par conséquent de protéger la chaîne de blocs d'attaques de type DoS.

Dans un mode particulier de réalisation du procédé de contrôle selon l'invention, le profil du terminal est obtenu par une instanciation d'un modèle de profil défini par un opérateur de l'application d'accès.

Ce mode de réalisation permet de garantir que le profil est conforme à une politique générale de l'opérateur représentée par ce modèle.

L'invention vise également un programme d'ordinateur sur un support d'enregistrement, ce programme étant susceptible d'être mis en œuvre dans un ordinateur. Ce programme comporte des instructions adaptées à la mise en œuvre d'un procédé d'accès tel que décrit ci-dessus.

L'invention vise également un programme d'ordinateur sur un support d'enregistrement, ce programme étant susceptible d'être mis en œuvre dans un ordinateur. Ce programme comporte des instructions adaptées à la mise en œuvre d'un procédé de contrôle d'accès tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions du premier ou du deuxième ou du troisième programme d'ordinateur tel que mentionné ci-dessus.

Les supports d'information ou d'enregistrement peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur, ou une mémoire flash.

D'autre part, les supports d'information ou d'enregistrement peuvent être des supports transmissibles tels qu'un signal électrique ou optique, qui peut être acheminé via un câble électrique ou optique, par lien radio, par lien optique sans fil ou par d'autres moyens.

Les programmes selon l'invention peuvent être en particulier téléchargés sur un réseau de type Internet.

Alternativement, chaque support d'informations ou d'enregistrement peut être un circuit intégré dans lequel un programme est incorporé, le circuit étant adapté pour exécuter ou pour être utilisé dans l'exécution de l'un des procédés conformes à l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 représente une application d'accès et une application de contrôle d'accès conformes à un mode particulier de réalisation dans leur environnement ;
[Fig. 2A] la figure 2A représente un modèle de profil pouvant être utilisé dans un mode de réalisation particulier ;
[Fig. 2B] la figure 2B représente un profil utilisateur obtenu par instanciation du modèle de la figure 2A;
[Fig. 3] la figure 3 représente sous forme d'organigramme les principales étapes d'un procédé d'accès et les principales étapes d'un procédé de contrôle d'accès conformes à des modes de réalisation de l'invention ;
[Fig. 4A] la figure 4A représente l'architecture logicielle d'une application de contrôle d'accès conforme à un mode particulier de réalisation de l'invention ;
[Fig. 4B] la figure 4B représente l'architecture fonctionnelle d'un terminal ;
[Fig. 4C] la figure 4C représente l'architecture logicielle d'une application de contrôle d'accès conforme à un mode particulier de réalisation de l'invention ;
[Fig. 5] la figure 5 représente l'architecture matérielle d'un dispositif pair mettant en oeuvre une application de contrôle d'accès conforme à un mode particulier de réalisation de l'invention ; et
[Fig. 6] la figure 6 représente l'architecture matérielle d'un dispositif pair mettant en oeuvre une application d'accès conforme à un mode particulier de réalisation de l'invention.

### Description des modes de réalisation

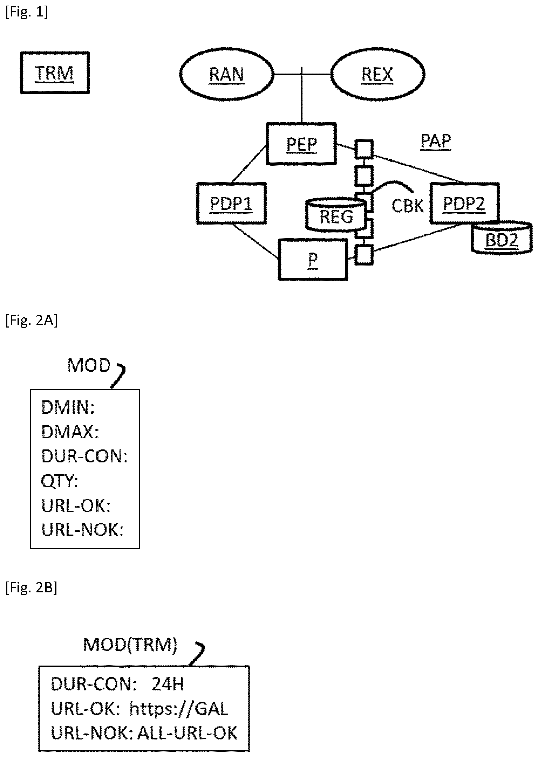

La figure 1 représente un terminal TRM, un réseau externe REX et un réseau d'accès mobile RAN via lequel le terminal TRM peut accéder au réseau externe REX.

La figure 1 représente également :
- une première application PDP1 de contrôle d'accès et une deuxième application PDP2 de contrôle d'accès, conformes à des modes particuliers de réalisation de l'invention, chacune configurée pour définir une politique de contrôle d'accès au réseau externe REX, ces politiques pouvant être similaires ou différentes ; et
- une application d'accès PEP conforme à un mode particulier de réalisation de l'invention configurée pour appliquer une politique de contrôle d'accès, par exemple décidée par l'application PDP1 ou par l'application PDP2.

On note PPEP un dispositif mettant en oeuvre une application d'accès PEP et PPDP un dispositif mettant en oeuvre une application de contrôle d'accès PDP.

Dans le mode de réalisation décrit ici, les dispositifs PPEP et PPDP sont des dispositifs pairs.

Dans le mode de réalisation décrit ici, ces applications PEP, PDP1 et PDP2 sont des applications décentralisées de type dApp mises en oeuvre par des pairs d'un réseau pair à pair PAP. Dans le mode de réalisation décrit ici, le réseau de pairs PAP comporte d'autres pairs de référence générale P. On rappelle qu'une dApps est une fonction décentralisée qui fonctionne sur un réseau pair à pair. Cette application se présente sous la forme d'un code exécutable.

Le dispositif pair PPEP est en coupure de flux entre le réseau d'accès RAN et le réseau externe REX.

Dans le mode de réalisation décrit ici, l'application d'accès PEP est opérée par un opérateur de services de télécommunication OPP.

Dans le mode de réalisation décrit ici, l'application PDP1 de contrôle d'accès est opérée par un tiers OPS.

Dans l'exemple de réalisation décrit ici, le tiers OPS est un opérateur mobile qui a acheté des ressources à l'opérateur OPP. Pour le distinguer de l'opérateur secondaire OPS, l'opérateur OPP sera parfois désigné par « opérateur principal » OPP. Lorsque le terme « opérateur » est utilisé sans qu'il soit précisé s'il s'agit de l'opérateur « principal » OPP ou de l'opérateur « secondaire » OPS, il faut comprendre qu'il s'agit de l'opérateur OPP qui opère l'application d'accès PEP.

Dans le mode de réalisation décrit ici, l'application module PDP2 de contrôle d'accès est opérée par une entreprise GAL qui souhaite faire bénéficier certains de ses clients de services réseau.

Ces modes de réalisation ne sont pas limitatifs, une application de contrôle d'accès conforme à l'invention peut être opérée par l'opérateur OPP.

Dans l'exemple de réalisation décrit ici, l'opérateur OPP définit un ou plusieurs modèles de profils MOD qui peuvent être utilisés par une application de contrôle d'accès, par exemple PDP1 ou PDP2, pour définir un profil d'accès pour un utilisateur donné.

Ces modèles de profils sont optionnels. Ils garantissent qu'une politique de contrôle d'accès définie à partir d'une telle structure de données est acceptable pour l'opérateur OPP.

La figure 2A représente un exemple MOD d'un tel modèle de profil. Il permet de spécifier les paramètres de connexion suivants :
- débit minimum DMIN ;
- débit maximum DMAX ;
- durée d'une période de connectivité DUR-CON ;
- quantité de données autorisée QTY ;
- adresses URL autorisées URL-OK
- adresses URL interdites URL-NOK.

On suppose que les applications PEP, PDP1, PDP2 sont inscrites à une chaîne de blocs CBK, chacune avec un identifiant dans la chaîne, respectivement ID_PEP, ID_PDP1, ID_PDP2.

Nous appellerons KPUB_CBK(A) la clé publique d'un dispositif A dans la chaîne de blocs CBK et KPRV_CBK(A) la clé privée associée gardée secrète par ce dispositif.

Sur la figure 1, on a également représenté un registre de confiance REG. Dans l'exemple de réalisation décrit ici, ce registre de confiance REG est partagé au sein de la chaîne de blocs CBK.

Dans l'exemple de réalisation décrit ici, le registre de confiance REG est opéré par un organisme régulateur, par exemple l'ARCEP (Autorité de régulation des communications électroniques, des postes et de la distribution de la presse) en France.

Dans un autre mode de réalisation, le registre de confiance peut être implémenté sous la forme d'une application décentralisée de type dApp (en anglais SmartContract). On rappelle qu'un contrat intelligent est, dans le contexte des mécanismes des chaînes de blocs, un programme informatique apte à réaliser des transactions de jetons sous certaines conditions.

Dans un mode de réalisation de l'invention, un enregistrement dans le registre de confiance peut faire l'objet d'une transaction financière.

Dans le mode de réalisation décrit ici, l'application d'accès PEP fournit une application d'autorisation décentralisée dAPP_AUT, qui peut être invoquée par une application PDPi de contrôle d'accès pour demander à l'application d'accès PEP de valider ou de refuser un accès au réseau externe REX, pour un terminal TRM et pour des paramètres de connexion donnés.

Cette application dAPP_AUT peut être une dApps au sens de la technologie des chaînes de blocs.

Dans l'exemple de réalisation décrit ici, la fonction d'autorisation dAPP_AUT est implémentée dans un pair P du réseau de pair PAP.

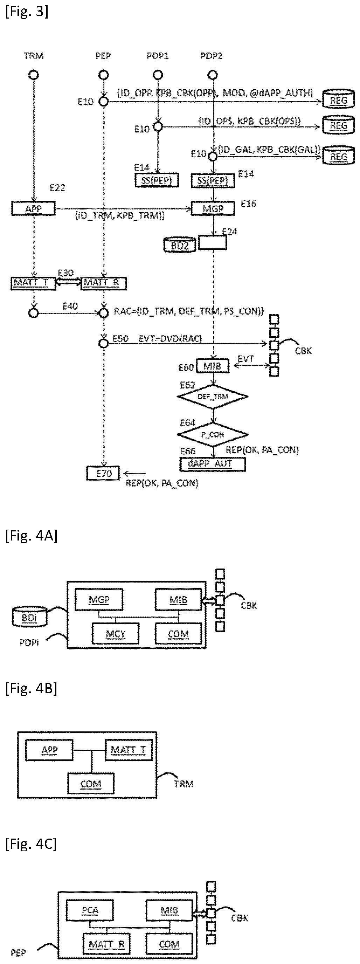

En référence à la figure 3, au cours d'une étape E10, chacune des applications PEP, PDP1 et PDP2 enregistre dans le registre de confiance REG, son identifiant dans la chaîne de blocs CBK et sa clé publique dans la chaîne de blocs et éventuellement d'autres informations.

Ainsi, dans le mode particulier de réalisation décrit ici:
- l'application d'accès PEP enregistre dans le registre de confiance REG, son identifiant ID_OPP, sa clé publique KPB_CBK(OPP), le modèle de profil MOD et l'adresse de l'application d'autorisation décentralisée dAPP_AUT ;
- l'application PDP1 de contrôle d'accès enregistre dans le registre de confiance REG, son identifiant ID_OPS et sa clé publique KPB_CBK(OPS), et
- l'application PDP2 de contrôle d'accès enregistre dans le registre de confiance REG, son identifiant ID_GAL et sa clé publique KPB_CBK(GAL).

Au cours d'une étape E14, chacune des applications PDP1, PDP2 de contrôle d'accès s'abonne aux événements publiés par l'application d'accès PEP.

Cette étape E14 d'abonnement peut comprendre le positionnement d'un filtre correspondant à la clé publique KPB_CBK(OPP) de l'opérateur dans la chaîne de blocs de sorte à filtrer les messages publiés par l'opérateur OPP sur la chaîne de blocs CBK.

Dans ce mode de réalisation et comme présenté plus précisément en référence à la figure 4A, chacune des applications de contrôle d'accès PDPi comporte un module MIB d'interface avec la chaîne de blocs CBK à cet effet.

On suppose maintenant que l'entreprise GAL souhaite faire bénéficier l'utilisateur du terminal TRM de certains services de l'opérateur OPP.

Dans le mode de réalisation décrit ici, l'application de contrôle d'accès PDP2 qui définit la politique de contrôle d'accès de l'entreprise GAL obtient le modèle de profil MOD enregistré dans le registre REG et crée (étape E24) une instance MOD(TRM) de ce modèle pour définir un profil comportant les droits d'accès de l'utilisateur du terminal TRM au réseau externe REX.

Dans l'exemple de réalisation décrit, cette étape d'instanciation est effectuée par un module MGP de gestion de profils de l'application PDP2 représentée à la figure 4A.

On suppose dans cet exemple que l'entreprise GAL souhaite permettre à cet utilisateur d'accéder au site Web d'URL http://GAL pour une durée de 48 heures à compter du premier accès à ce site. L'instance MOD(TRM) du modèle correspondant à ces paramètres de connexion est représentée à la figure 2B. Elle est enregistrée dans une base de données BD2 gérée par l'application de contrôle d'accès PDP2.

L'instance MOD(TRM) constitue un profil d'accès au réseau externe REX pour le terminal TRM qui est compatible avec la politique générale définie par l'opérateur OPP puisqu'il correspond au modèle MOD défini par l'opérateur OPP.

Dans le mode de réalisation décrit ici, et comme décrit ultérieurement en référence à la figure 4B, le terminal TRM de l'utilisateur comporte une application APP configurée pour générer un couple (KPB(TRM), KPRIV(TRM)) de clés publique/privée compatibles et pour enregistrer ces clés dans une mémoire du terminal TRM.

Dans le mode de réalisation décrit ici, le terminal TRM est configuré pour communiquer son identifiant ID_TRM et sa clé publique KPB(TRM) à l'application PDP2, par exemple au cours d'une étape E22 dans l'exemple de la figure 3.

Dans l'exemple de la figure 3, ces données sont reçues au cours d'une étape E16 par le module MGP de gestion de profils de l'application de contrôle d'accès PDP2.

On suppose, toujours dans l'exemple de la figure 3, que l'application de contrôle d'accès PDP2 enregistre dans sa base de données BD2 l'identifiant ID_TRM et la clé publique KPB(TRM) de l'utilisateur au moment (étape E24) de l'enregistrement de l'instance MOD(TRM).

Ces enregistrements peuvent aussi se faire indépendamment les uns des autres, du moment que l'application de contrôle d'accès PDP2 est en mesure de constituer dans sa base de données BD2, un enregistrement comportant :
- l'identifiant ID_TRM de l'utilisateur
- sa clé publique KPB(TRM), et
- son profil MOD(TRM) définissant ses droits d'accès au réseau externe REX.

On suppose maintenant que l'utilisateur du terminal TRM souhaite utiliser l'application mobile APP pour accéder au site Web http://GAL de l'entreprise GAL.

Dans le mode de réalisation décrit ici, le terminal comporte un module MATT_T lui permettant de s'attacher au réseau d'accès RAN de l'opérateur ; ce module d'attachement MATT_T ne permet pas au terminal TRM d'accéder au réseau externe EXT.

Plus précisément, dans le mode de réalisation décrit ici, ce module MATT_T est configuré pour mettre en oeuvre les échanges d'une procédure d'attachement au réseau d'accès RAN référencée E30 à la figure 3, ces échanges se terminant par la réception d'une adresse IP par le terminal TRM. Cette procédure est connue de l'homme du métier.

Dans l'exemple de réalisation décrit ici, le module de l'application PEP d'accès qui participe à cet attachement, est référencé MATT_R.

Dans un mode de réalisation décrit ici, et comme détaillé ultérieurement en référence à la figure 4C, l'application d'accès PEP comporte une passerelle de contrôle d'accès PCA configurée pour fournir l'adresse IP au terminal TRM, via le module d'attachement MATT_R, dans le cadre de la procédure d'attachement.

Dans le mode de réalisation décrit ici, la passerelle de contrôle d'accès PCA est implémentée dans une passerelle P-Gateway de l'opérateur mais elle peut être implémentée dans un autre équipement, par exemple en aval dans le chemin du flux.

Une fois le terminal TRM attaché au réseau, l'application mobile APP envoie, comme de façon connue, une requête d'accès RAC au réseau externe REX (étape E40). Cette requête RAC comporte par exemple l'identifiant ID_TRM du terminal, un défi DEF_TRM signé par la clé privée KPRIV(TRM) du terminal et des paramètres souhaités de connexion PS_CON.

Cette requête d'accès utilise l'adresse IP fournie par la passerelle de contrôle d'accès PCA. Elle peut être de tout type, par exemple de type HTTP dans l'exemple de l'accès au site http://GAL, mais aussi par exemple de type SIP pour un appel de voix sur IP.

La requête d'accès RAC est reçue par la passerelle de contrôle d'accès PCA au cours de cette même étape E40. Cette passerelle PCA constitue par conséquent un exemple de module de réception d'une requête d'accès au sens de l'invention.

Sur réception de cette requête d'accès RAC, l'application PEP publie dans la chaîne de blocs CBK une demande DVD(RAC) de vérification de droit pour ledit d'accès (étape E50). Dans le mode de réalisation décrit ici, cette demande comporte au moins l'identifiant ID_TRM du terminal, les paramètres souhaités de connexion PS_CON et la clé publique KPB_PUB(OPP) de l'opérateur OPP.

Dans une variante de réalisation, la demande de vérification de droit pour ledit accès comporte également un défi DEF_TRM signé par la clé privée KPRIV(TRM) du terminal pour qu'il soit vérifié par l'application de contrôle d'accès.

Dans le mode de réalisation décrit ici, et comme représenté à la figure 4C, l'application d'accès PEP comporte un module MIB d'interface avec la chaîne de blocs CBK, ce module MIB étant configuré pour pouvoir publier la demande DVD(RAC).

Dans un premier mode de réalisation, pour effectuer cette publication, ce module d'interface MIB envoie un événement EVT dans la chaîne de blocs CBK. Cet événement est détecté par le module MIB d'interface avec la chaîne de blocs CBK de l'application PDP2 de contrôle d'accès, qui dans cet exemple, est configuré pour filtrer tous les événements publiés par l'opérateur OPP sur la base de la clé publique KPB_CBK(OPP). Le module MIB d'interface de l'application PDP2 de contrôle d'accès constitue un exemple particulier d'un module de détection d'une demande de vérification au sens de l'invention.

Dans un autre mode de réalisation, le module d'interface MIB de l'application d'accès PEP effectue cette publication en invoquant une application décentralisée de type dAPP dans la chaîne de blocs CBK.

Dans le mode de réalisation décrit en référence à la figure 3, l'application de contrôle d'accès PDP2 détecte l'événement EVT, ou de façon plus générale, la publication de la demande de vérification d'un droit d'accès dans la chaîne de blocs CBK au cours d'une étape E60.

Au cours d'une étape E62, l'application de contrôle d'accès PDP2 obtient l'identifiant ID_TRM du terminal TRM à l'origine de la requête d'accès RAC de l'étape E40 et utilise la clé publique KPB(TRM) de ce terminal pour vérifier le défi DEF_TRM compris dans la requête d'accès dans le cas où ce défi est compris dans la demande de vérification de droit.

Dans le mode de réalisation décrit ici, et comme représenté à la figure 4A, l'application PDP2 de contrôle d'accès comporte un module cryptographique MCY à cet effet.

Le défi ayant dans cet exemple été signé avec la clé privée KPRIV(TRM) du terminal TRM, ce défi est validé.

Dans ce mode de réalisation, la passerelle de contrôle d'accès PCA de l'opérateur n'effectue pas de vérification sur le terminal TRM avant de publier (à l'étape E50) la demande d'accès dans la chaîne de blocs CBK. En variante, le terminal TRM envoie sa clé publique KPB(TRM) dans sa requête d'accès RAC (à l'étape E40) et la passerelle de contrôle d'accès PCA vérifie que le défi a été valablement signé avant de publier la demande dans la chaîne de blocs.

Le défi ayant été validé par l'application de contrôle d'accès PDP2, celle-ci vérifie si les paramètres souhaités de connexion PS_CON définis par le terminal TRM sont conformes au profil MOD(TRM) de ce terminal.

Dans l'exemple de réalisation décrit en référence à la figure 3, cette vérification est effectuée au cours d'une étape E64 par le module MGP de gestion de profils de l'application de contrôle d'accès PDP2.

Dans le mode de réalisation décrit ici, l'application de contrôle d'accès PDP2 détermine une réponse REP à ladite demande de vérification de droit d'accès, ladite réponse comportant :
- soit une instruction de refus,
- soit une instruction d'autorisation d'accès avec des paramètres PA_CON autorisés de connexion, identiques ou différents des paramètres souhaités de connexion PS_CON.

Dans l'exemple de réalisation décrit ici, les paramètres souhaités de connexion PS_CON sont conformes au profil MOD(TRM) du terminal, et la réponse de l'application de contrôle d'accès PDP2 comporte une instruction d'autoriser l'accès avec des paramètres autorisés de connexion PA_CON identiques aux paramètres souhaités de connexion PS_CON.

Le module cryptographique CRY et le module MGP de gestion de profils constituent conjointement un exemple particulier de réalisation d'un module de détermination de réponse au sens de l'invention. Dans le mode de réalisation décrit ici, l'application PDP2 de contrôle d'accès fournit la réponse REP au cours d'une étape E66 en invoquant l'application d'autorisation décentralisée dApp_AUT fournie par l'opérateur OPP.

Dans le mode de réalisation décrit ici, l'invocation de l'application décentralisée dApp_AUT est effectuée par le module MIB d'interface avec la chaîne de blocs CBK de l'application de contrôle d'accès PDP2. Cette fonction est invoquée avec pour paramètres au moins les paramètres autorisés de connexion PA_CON. Ce module d'interface MIB constitue un exemple de module de fourniture de réponse au sens de l'invention.

Dans le mode de réalisation décrit ici, cette application dAPP_AUT permet en même temps qu'elle demande à l'opérateur OPP d'autoriser un l'accès, d'effectuer une transaction entre l'entreprise GAL et l'opérateur OPP pour que l'entreprise GAL prenne en charge le paiement de cet accès au réseau par le terminal TRM. Cette transaction peut s'effectuer par un transfert de jetons.

Dans l'exemple décrit ici, seule l'application de contrôle d'accès PDP2 a répondu (étape E66) à la demande d'accès publiée par l'application d'accès PEP à l'étape E50. Dans un autre exemple, plusieurs applications de contrôle d'accès pourraient répondre, par exemple l'application de contrôle d'accès PDP1 si l'utilisateur du terminal TRM avait souscrit un abonnement auprès de l'opérateur secondaire OPS.

En référence à la figure 3, la passerelle de contrôle d'accès PCA de l'application d'accès PEP reçoit au cours d'une étape E70 l'instruction donnée par l'application de contrôle d'accès PDP2 d'autoriser l'accès au terminal avec les paramètres autorisés de connexion PA_CON. Elle traite la requête d'accès conformément à ces instructions au cours de cette même étape. La passerelle de contrôle d'accès est donc un module de traitement d'une requête d'accès au sens de l'invention.

Conformément aux instructions, la passerelle de contrôle d'accès autorise le terminal TRM à accéder au site Web httDS://GAL pendant 48H.

Dans un mode de réalisation de l'invention, la passerelle de contrôle d'accès PCA de l'application d'accès PEP publie toutes les requêtes d'accès RAC qu'elle reçoit (étape E40) dans la chaîne de blocs (étape E50).

Dans un autre mode de réalisation, la passerelle de contrôle d'accès PCA est configurée pour vérifier localement si les conditions d'accès d'un terminal TRM sont valides avant de publier une demande d'accès. Par exemple, dans l'exemple décrit ici, la passerelle de contrôle PCA est adaptée pour laisser le terminal TRM accéder pendant 48h au site http://GAL. Pendant cette période de temps, l'application d'accès PEP laisse passer les requêtes d'accès au site Web : l'étape E50 de publication n'est pas mise en oeuvre.

La passerelle de contrôle d'accès PCA peut éventuellement réaliser une fonction de traduction d'adresses entre le réseau d'accès RAN et le réseau externe REX.

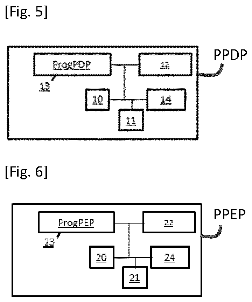

La figure 5 représente l'architecture matérielle d'un pair PPDP mettant en oeuvre une application de contrôle d'accès PDP conforme à l'invention. Dans le mode de réalisation décrit ici, ce pair a l'architecture matérielle d'un ordinateur. Il comprend notamment un processeur 10, une mémoire vive 11, une mémoire morte 12, une mémoire flash non volatile 13 et des moyens de communication 14. De tels moyens sont connus en soi et ne sont pas décrits plus en détail ici.

La mémoire morte 12 constitue un support d'enregistrement conforme à l'invention, lisible par le processeur 10 et sur lequel est enregistré ici un programme d'ordinateur ProgPDP conforme à l'invention, ce programme comportant des instructions permettant notamment, lorsqu'elles sont exécutées par le processeur 10 :
- d'enregistrer un identifiant et une clé publique de l'application de contrôle d'accès dans le registre REG, comme à l'étape E10 ;
- de s'abonner auprès de la chaîne de blocs pour détecter les événements publiés par une application d'accès, comme à l'étape E14 ;
- de définir un profil d'accès pour un terminal, comme aux étapes E16 et E24 ;
- de détecter une demande publiée par cette application d'accès dans la chaine de blocs, cette demande étant consécutive à la réception par cette application d'accès d'une requête envoyée par un terminal pour accéder au réseau avec certaines conditions ;
- de vérifier si ces conditions sont conformes au profil d'accès de ce terminal ; et
- d'invoquer une application d'autorisation décentralisée pour demander à l'application d'accès d'autoriser ou de refuser l'accès au réseau par ce terminal en fonction du résultat de cette vérification.

La figure 6 représente l'architecture matérielle d'un pair PPEP mettant en oeuvre une application d'accès PEP conforme à l'invention. Dans le mode de réalisation décrit ici, ce pair a l'architecture matérielle d'un ordinateur. Il comprend notamment un processeur 20, une mémoire vive 21, une mémoire morte 22, une mémoire flash non volatile 23 et des moyens de communication 24. De tels moyens sont connus en soi et ne sont pas décrits plus en détail ici.

La mémoire morte 22 constitue un support d'enregistrement conforme à l'invention, lisible par le processeur 20 et sur lequel est enregistré ici un programme d'ordinateur ProgPEP conforme à l'invention, ce programme comportant notamment des instructions permettant notamment, lorsqu'elles sont exécutées par le processeur 20 :
- d'enregistrer dans le registre REG un identifiant et une clé publique de cette application d'accès, une structure de données MOD représentative d'une politique générale de l'opérateur, et l'adresse d'une application d'autorisation décentralisée dAPP_AUT comme à l'étape E10,
- d'attacher un terminal au réseau, puis de recevoir des requêtes de ce terminal pour accéder au réseau externe comme aux étapes E30 et E40 ;
- publier ces demandes d'accès dans la chaîne de blocs comme à l'étape E50 soit systématiquement soit après avoir vérifié que des conditions d'accès ne sont plus satisfaites, et
- autoriser ou refuser l'accès au réseau en fonction d'une réponse envoyée par une application de contrôle d'accès.

## Revendications

1. Procédé d'accès mis en oeuvre par une application d'accès (PEP) dans un réseau (RAN, REX) de communications comportant un réseau d'accès (RAN) et un réseau (REX) externe audit réseau d'accès (RAN), cette application d'accès (PEP) étant inscrite à une chaîne de blocs (CBK) et mise en œuvre par un dispositif (PPEP) en coupure de flux entre ledit réseau d'accès (RAN) et ledit réseau externe (REX), ce procédé comportant :
- une étape (E40) de réception d'une requête d'accès (RAC) audit réseau externe (REX), cette requête (RAC) comportant au moins un identifiant (ID_TRM) d'un terminal (TRM) attaché audit réseau d'accès (RAN) et des paramètres souhaités (PS_CON) de connexion ;
- une étape (E50) de publication, dans ladite chaîne de blocs (CBK), d'une demande de vérification d'un droit (DVD(RAC)) pour ledit accès ;
- une étape (E70) de réception d'une réponse à ladite demande de vérification, la réponse étant déterminée en fonction d'un profil défini pour ce terminal par une application de contrôle d'accès (PDP) inscrite à la chaine de blocs (CBK), ladite réponse comportant une instruction de refuser ou une instruction d'accepter l'accès avec des paramètres autorisés de connexion (PA_CON) ; et
- une étape de traitement de ladite requête d'accès (RAC) selon lesdites instructions.

2. Procédé d'accès selon la revendication 1, ledit procédé comportant une étape (E10) de fourniture d'une application décentralisée d'autorisation (dAPP_AUT), cette application étant destinée à être invoquée par ladite application de contrôle d'accès (PDP) pour fournir ladite réponse.

3. Procédé d'accès selon la revendication 1 ou 2 dans lequel ladite requête d'accès (RAC) comporte un défi (DEF_TRM) signé par une clé privée (KPRIV(TRM)) du terminal, ladite application d'accès (PEP) étant configurée pour :
- communiquer ledit défi (DEF_TRM) dans ladite demande de vérification d'un droit d'accès (DVD(RAC)) pour qu'il soit vérifié par l'application de contrôle d'accès ;
- ou pour vérifier ledit défi avec une clé publique (KPUB(TRM)) du terminal (TRM) si celle-ci est comprise dans ladite requête d'accès (RAC), ladite étape (E50) de publication de la demande de vérification de droit étant mise en œuvre uniquement en cas de vérification positive dudit défi.

4. Application d'accès (PEP) à un réseau de communications (REX) externe à un réseau d'accès (RAN), cette application (PEP) étant inscrite à une chaîne de blocs (CBK), mise en œuvre par un dispositif (PPEP) en coupure de flux entre ledit réseau d'accès (RAN) et ledit réseau externe (REX), et comportant :
- un module (PCA) de réception d'une requête d'accès (RAC) audit un réseau externe (REX), cette requête (RAC) comportant au moins un identifiant (ID_TRM) d'un terminal (TRM) attaché audit réseau d'accès (RAN) et des paramètres souhaités (PS_CON) de connexion ;
- un module (MIB) de publication, dans une chaîne de blocs (CBK), d'une demande de vérification d'un droit (DVD(RAC)) pour ledit accès ;
- un module (COM) de réception d'une réponse à ladite demande de vérification, la réponse étant déterminée en fonction d'un profil défini pour ce terminal par une application de contrôle d'accès (PDP) inscrite à la chaine de blocs (CBK), ladite réponse comportant une instruction de refuser ou une instruction d'autoriser l'accès avec des paramètres autorisés de connexion (PA_CON) ; et
- un module (PCA) de traitement de ladite requête d'accès (RAC) selon lesdites instructions.

5. Programme d'ordinateur (ProgPEP) comportant des instructions pour l'exécution d'un procédé d'accès selon l'une des revendications 1 à 3 lorsque ledit programme est exécuté par un ordinateur (PEP).

6. Procédé de contrôle d'accès mis en oeuvre par une application de contrôle d'accès (PDP) à un réseau de communications (REX) externe à un réseau d'accès (RAN), cette application (PDP) étant inscrite dans une chaîne de blocs (CBK), ce procédé comportant :
- une étape (E60) de détection d'une demande de vérification d'un droit (DVD(RAC)) d'accès d'un terminal audit réseau externe (REX), ledit terminal étant attaché audit réseau d'accès (RAN), ladite demande (DVD(RAC)) comportant au moins un identifiant (ID_TRM) du terminal (TRM) et des paramètres souhaités (PS_CON) de connexion, ladite demande étant publiée dans ladite chaîne de blocs (CBK) par une application (PEP) d'accès audit réseau mise en œuvre par un dispositif (PPEP) en coupure de flux entre ledit réseau d'accès (RAN) et ledit réseau externe (REX) ;
- une étape (E62, E64) de détermination d'une réponse (REP) à ladite demande en fonction d'un profil défini par ladite application de contrôle d'accès (PDP) pour ledit terminal (TRM), ladite réponse comportant une instruction de refuser ou une instruction d'autoriser l'accès avec des paramètres autorisés de connexion (PA_CON) ; et
- une étape (E66) de fourniture de ladite réponse (REP) à ladite application d'accès (PEP) .

7. Procédé de contrôle d'accès selon la revendication 6, **caractérisé en ce que** ladite étape de fourniture de réponse comporte une invocation (E66) d'une application décentralisée d'autorisation (dAPP_AUT).

8. Procédé de contrôle d'accès selon la revendication 7, **caractérisée en ce que** ladite application décentralisée d'autorisation est configurée pour permettre une transaction entre un opérateur (OPS, GAL) de ladite application de contrôle d'accès (PDP1, PDP2) et un opérateur (OPP) de ladite application d'accès (PEP).

9. Procédé de contrôle selon la revendication 7 ou 8 **caractérisé en ce que** ledit profil du terminal est obtenu (E24) par une instanciation d'un modèle de profil (MOD) défini par un opérateur (OPP) de ladite application d'accès (PEP).

10. Application de contrôle d'accès (PDP) à un réseau de communications (REX) externe à un réseau d'accès (RAN), cette application (PDP) étant inscrite dans une chaîne de blocs (CBK) et comportant :
- un module (MIB) de détection d'une demande de vérification d'un droit (DVD(RAC)) d'accès d'un terminal audit réseau externe (REX), ledit terminal étant attaché audit réseau d'accès (RAN), ladite demande (DVD(RAC)) comportant au moins un identifiant (ID_TRM) du terminal (TRM) et des paramètres souhaités (PS_CON) de connexion, ladite demande étant publiée, dans ladite chaîne de blocs (CBK) par une application (PEP) d'accès audit réseau mise en œuvre par un dispositif (PPEP) en coupure de flux entre ledit réseau d'accès (RAN) et ledit réseau externe (REX) ;
- un module (CRY, MGP) de détermination d'une réponse (REP) à ladite demande de vérification en fonction d'un profil de contrôle d'accès défini par ladite application de contrôle d'accès (PDP) pour ledit terminal (TRM), ladite réponse comportant une instruction de refuser ou une instruction d'autoriser l'accès avec des paramètres autorisés de connexion (PA_CON) ; et
- un module (MIB) de fourniture de ladite réponse (REP) à ladite application d'accès (PEP).

11. Programme d'ordinateur (ProgPDP) comportant des instructions pour l'exécution d'un procédé de contrôle d'accès selon l'une des revendications 6 à 9 lorsque ledit programme est exécuté par un ordinateur.
